# EUROPÄISCHE PATENTSCHRIFT

(11) **EP 2 739 870 B1**
(45) Veröffentlichungstag und Bekanntmachung des Hinweises auf die Patenterteilung: **14.09.2016**
(21) Anmeldenummer: 12740298.0
(22) Anmeldetag: 13.07.2012
(51) Int. Cl.: F16D 23/14, F16D 21/06

(54) **AUSRÜCKSYSTEM**
DISENGAGING SYSTEM
SYSTÈME DE DÉBRAYAGE

(30) Priorität: 05.08.2011 DE 102011080544; 07.05.2012 DE 102012207541; 14.06.2012 DE 102012209943
(43) Veröffentlichungstag der Anmeldung: 11.06.2014
(73) Patentinhaber: Schaeffler Technologies AG & Co. KG, 91074 Herzogenaurach (DE)
(72) Erfinder: RAMMHOFER, Thomas, 77880 Sasbach (DE); SESTER, Christof, 77723 Gengenbach (DE); KRAHTOV, Luben, 76530 Baden-Baden (DE); CLAUSS, Mathieu, F-67610 La Wantzenau (FR)
(74) Vertreter: Maas, Florian
(86) Internationale Anmeldenummer: PCT/DE2012/000705
(87) Internationale Veröffentlichungsnummer: WO 2013/020533

(56) Entgegenhaltungen:
- EP-A2- 1 808 613
- DE-A1-102009 034 398
- DE-A1-102009 034 812
- DE-A1-102010 022 750

## Beschreibung

Die Erfindung betrifft ein Ausrücksystem zur Betätigung einer Kupplung, wobei das Ausrücksystemin der Art eines CSC (Concentric Slave Cylinder) ausgebildet ist und zumindest einen in einem Gehäuse entlang einer Längsachse verschiebbaren ersten Kolben aufweist, dessen in Richtung zu einem Druckraum weisendes Ende eine Dichtung aufweist und der an dem der Dichtung gegenüberliegenden Bereich auf ein Einrücklager wirkt, nach dem Oberbegriff des ersten Patentanspruchs.

Ein Kupplungsausrücksystem besteht im Wesentlichen aus einem Gehäuse, in dem ein mit einem Ausrücklager bzw. Einrücklager verbundener Kolben axial geführt wird. Da dieses Aus/ Einrücklager mit der Beaufschlagungseinrichtung der Reibungskupplung in Wirkverbindung steht, werden Schleppmomente von der Antriebseinheit des Fahrzeuges kommend auf das Einrücklager übertragen. Durch diese Schleppmomente neigt der sich drehende, lediglich über einen Reibkontakt in der Aufnahme fixierte Lagerring des Einrücklagers zum Verdrehen gegenüber der Aufnahme, wodurch Zentrierungsvorgänge des Einrücklagerrings gegenüber dem Kolben zu einem entsprechenden Verschleiß führen. Daher ist es bekannt, Verdrehsicherungen zwischen dem nicht drehenden Lagerring und dem Beaufschlagungsteil vorzusehen, die eine Verdrehung verhindern.

Es sind dabei reibschlüssig und formschlüssig wirkende Verdrehsicherungen bekannt. Bei Erhöhung der Schleppmomente, insbesondere bei tiefen Temperaturen, besteht bei reibschlüssigen Verdrehsicherungen die Gefahr des Rutschens, während bei formschlüssigen Verdrehsicherungen die Gefahr der Zerstörung der Verdrehsicherung und Beschädigung der Betätigungseinheit nicht auszuschließen ist. Zur Vermeidung der Übertragung des Schleppmomentes fungiert die Vorlastfeder als Abstützung des Einrücklagers des Nehmerzylinderkolbens am Nehmerzylindergehäuse.

Eine Doppelkupplung dagegen umfasst zwei im Wesentlichen separate Kupplungseinheiten, die unabhängig voneinander über jeweils eine Einrückvorrichtung eine Verbindung zu je einer Getriebeeingangswelle unterbrechen und herstellen können. Ein bevorzugtes Einsatzgebiet einer solchen Doppelkupplung ist die Kombination mit einem Doppelkupplungsgetriebe. Die erste Kupplungseinheit bedient hierbei beispielsweise die ungeraden Gangstufen und die zweite Kupplungseinheit die geraden Gangstufen. Auf diese Weise kann, während über die eine Kupplungseinheit aktuell Drehmoment vom Motor auf das Getriebe übertragen wird, bereits eine andere Gangstufe vorgewählt werden, um anschließend ohne Unterbrechung der Zugkraft von der aktuellen Gangstufe in die vorgewählte Gangstufe schalten zu können.

Die Getriebeeingangswelle ist hierfür meist aus zwei konzentrischen Wellen aufgebaut, das heißt aus einer Hohlwelle und einer innen liegenden Vollwelle.

Eine solche Doppelkupplung ist beispielsweise aus der DE 10 2009 053 486 A1 bekannt. Zur Betätigung der einzelnen Kupplungseinheiten sind hier zwei konzentrisch zueinander angeordnete, mit Einrücklagern in Wirkverbindung stehende Nehmerzylinderkolben bzw. Steilkolben, das heißt ein innerer Nehmerzylinderkolben und ein äußerer Nehmerzylinderkolben, vorgesehen. Der innere und der äußere Nehmerzylinderkolben werden jeweils in einem gemeinsamen ringzylindrischen Nehmerzylindergehäuse geführt. Ein solcher Nehmerzylinder wird auch als CSC (Concentric Slave Cylinder) bezeichnet. Nach der Druckschrift DE 10 2009 053 486 A1 ist das die Schleppmomentenabstützung und die Verdrehsicherung gewährleistende Federelement in Form eines Federbleches ausgebildet, welches laschenförmige Erweiterungen aufweist. Diese Laschen hintergreifen die Erhebungen der Schleppmomentabstützung. Der Kolben ist so ausgebildet, dass die Schleppmomentabstützung über das Federblech durch Reibschluss mit dem Kolben erfolgt. Die Montage des Federbleches ist dabei sehr aufwendig.

Es ist weiterhin bekannt, dass für hydraulische CSC die Verdrehsicherung über eine Vorlastfeder mit meist 4 Windungen realisiert wird. Die Vorlastfeder liegt konzentrisch über dem hydraulischen Betätigungszylinder und bildet ebenfalls einen Reibschluss bzw. Formschluss zum Gehäuse und zum Einrücklager. Die Vorlastfeder kann als Zylinderfeder beziehungsweise taillierte Feder ausgeführt sein. Dieses Design der Vorlästfeder hat sich als sehr vorteilhaft erwiesen, da unter anderem damit eine einfache Montage gewährleistet ist, benötigt jedoch einen großen Bauraum.

Die DE 10 2009 034 812 A1 offenbart ein Ausrücksystem zur Betätigung einer Kupplung gemäß den Merkmalen des Oberbegriffs des Patentanspruchs 1.

Für die Betätigung der Kupplung muss die Vorlastfeder das Lagerschleppmoment abzustützen, wobei zu gewährleisten ist, dass sich die Vorlastfeder nicht stark aufweitet. Die Kupplung leitet zusätzlich starke Taumelbewegungen ein (induziert durch Zungenschlag, Schiefstellung, Mittenversatz der Tellerfeder etc) und axial überlagerte Schwingbewegungen in den Kolben. In Kombination mit dem Lagerschleppmoment ist diese Bewegungen an der Verdrehsicherung abzustützen. Daraus entsteht ein massiver Verschleiß an der Verdrehsicherung. Weiterhin verhindern bekannte Verdrehsicherungen die Drehung der Dichtung. Bei Vorhandensein minimaler Riefen in der Dichtfläche oder auch von Schmutzpartikeln begünstigt das die Entstehung von Riefen auf der Dichtung verbunden mit dem frühzeitigen Ausfall des Dichtsystems.

Die bekannten Doppelkupplungen haben weiterhin in Schnüffelposition (Ausgangsstellung, System drucklos) eine Vorlast gegen den Einrücklageranschlag von z. Bsp. 200N.

Dadurch ist keine Vorlast für das Lager notwendig. Die Vorlastfeder dient daher bei einer derartigen Anwendung hauptsächlich als Lagerschleppmomentabstützung und zusätzlich als Entlastungsfeder.

Aufgabe der Erfindung ist es, ein Ausrücksystem zur Betätigung einer Kupplung zu entwickeln, wobei das Ausrücksystem insbesondere in der Art eines CSC (Concentric Slave Cylinder) ausgebildet ist und bei welchem eine Verdrehsicherung und Lagerschleppmomentabstützung mit einer Feder für einen reduzierten Bauraum realisiert werden kann.

Diese Aufgabe wird mit den kennzeichnenden Merkmalen des ersten Patentanspruchs gelöst.

Vorteilhafte Ausgestaltungen ergeben sich aus den Unteransprüchen.

Das erfindungsgemäße Ausrücksystem zur Betätigung einer Kupplung, ist insbesondere in der Art eines CSC (Concentric Slave Cylinder) ausgebildet ist und weist zumindest einen in einem in einem Gehäuse entlang einer Längsachse verschiebbaren ersten Kolben auf, dessen in Richtung zu einem Druckraum weisendes Ende eine Dichtung mit einer Dichtung versehen ist und dessen der Dichtung gegenüberliegender Bereich auf ein Einrücklager wirkt, wobei erfindungsgemäß zu einer Verdrehsicherung eines stehenden Lagerrings des Einrücklagers zur Abstützung von über das Einrücklager induzierten Schleppmomenten zumindest ein energiespeicherndes Element in das Ausrücksystem integriert ist, welches mit einem tangentialen Abstützmoment (Torsionsmoment) dem Schleppmoment entgegenwirkt.

Diese Lösung ist für Doppelkupplungen einsetzbar.

Wirkt das Ausrücksystem auf eine Doppelkupplung, weist es einen ersten Kolben und einen zweiten Kolben auf, wobei der erste Kolben radial außen liegend zum zweiten Kolben angeordnet ist und beide Kolben als Ringkolben ausgebildet und konzentrisch in einem gemeinsamen Gehäuse untergebracht sind und jeweils in Richtung zu einem Druckraum eine Dichtung aufweisen und der erste Kolben an dem einer ersten Dichtung gegenüberliegenden Bereich auf ein außen liegendes erstes Einrücklager wirkt und der zweite Kolben an dem einer zweiten Dichtung gegenüberliegenden Bereich auf ein innen liegendes zweites Einrücklager wirkt und wobei zu einer Verdrehsicherung eines jeweils stehenden Lagerrings des ersten und/oder zweiten Einrücklagers zur Abstützung von über die Einrücklager induzierten Schleppmomenten zumindest ein energiespeicherndes Element in den Nehmerzylinder integriert ist, welches mit einem tangentialen Abstützmoment (Torsionsmoment) dem Schleppmoment entgegenwirkt.

Bei einem eventuellen Übermoment vom Einrücklager verdreht sich das energiespeichernde Element entsprechend seines Torsionsmomentes bis zu einem definierten Maß und bildet somit eine Verdrehsicherung für den stehenden Lagerring des Einrücklagers. Das Energiespeichernde Element erzeugt somit eine Federkraft entgegen der Einrückrichtung des CSC.

Das energiespeichernde Element in Form einer auf Torsion beanspruchbaren Druckfeder, insbesondere in der Art einer Spiralfeder oder Zylinderfeder, ausgebildet und weist maximal 2 Windungen auf, wodurch ein weiches Federelement zur Verfügung gestellt wird. Diese Variante ist für Anwendungen vorgesehen, in denen keine Vorlast für das Einrücklager notwendig ist und wobei daher das energiespeichende Element hauptsächlich als Lagerschleppmomentenabstützung und zusätzlich als Entlastungsfeder dient.

Bei der erfindungsgemäßen Lösung wird vorzugsweise eine erste Druckfeder an ihrem ersten Ende radial verdrehgesichert direkt oder über ein erstes Halteblech mit einem ersten Lagerring des ersten Einrücklagers und mit ihrem zweiten Ende verdrehgesichert direkt oder über einen ersten Haltering mit dem Gehäuse verbunden, wenn eine derartige Schleppmomentenabstützung und Verdrehsicherung für das radial außen angeordnete erste Einrücklager realisiert werden soll.

Zusätzlich oder alternativ kann ebenfalls für die Schleppmomentenabstützung des zweiten Einrücklagers eine zweite Druckfeder an ihrem ersten Ende radial verdrehgesichert direkt oder über ein zweites Halteblech mit einem zweiten Lagerring des zweiten Einrücklagers und mit ihrem zweiten Ende verdrehgesichert direkt oder über einen zweiten Haltering mit dem Gehäuse verbunden sein.

Wirkt je nach konstruktiver Ausführung auf die erste und/oder zweite Druckfeder durch ein über den ersten oder zweiten feststehenden Lagerring induziertes Schleppmoment ein Torsionsmoment auf das erste Ende der ersten/zweiten Druckfeder, so vergrößert/vergrößern diese ihren Durchmesser. Ein Anschlag am ersten bzw. zweiten Kolben und/oder am ersten oder ersten/zweiten Halteblech verhindert eine weitere Vergrößerung des Durchmessers der Feder/n, so dass diese damit "auf Anschlag gehen" und eine weitere Verdrehung des ersten Endes der ersten/zweiten Druckfeder und somit des ersten/zweiten Lagerrings verhindert und somit dessen Verdrehsicherung realisiert wird.

Vorteilhafter Weise besitzt der erste/zweite Kolben zu dem diesem zugeordneten ersten/zweiten Halteblech bzw. zum ersten/zweiten Lagerring ein Spiel und ist somit dazu relativ drehbar und die erste/zweite Dichtung weist ein Spiel zum ersten/zweiten Kolben auf und ist ebenfalls relativ zu diesem drehbar, wodurch sich insgesamt der Dichtungsverschleiß reduziert.

Am äußeren ersten Lagerring stützt sich eine erste Druckfeder in Form einer Spiralfeder mit ihrem ersten Ende ab und ist mit ihrem zweiten Ende in einem mit dem Gehäuse verbundenen ersten Haltering definiert geführt.

Am inneren zweiten Lagerring stützt sich über ein an diesem befestigtes zweites Halteblech eine zweite Druckfeder in Form einer Zylinderfeder mit ihrem ersten Ende ab und ist mit ihrem zweiten Ende über den zweiten Haltering mit dem Gehäuse verbunden. Bei Verwendung einer Zylinderfeder wird bei entsprechendem Schleppmoment von dem zweiten Halteblech radial abgestützt. Dadurch kann ein kleinerer Federdrahtdurchmesser gewählt werden, wodurch ein Bauraumvorteil zu verzeichnen ist.

Die Führung bzw. Halterung des zweiten Endes der ersten bzw. zweiten Feder mit dem ersten/zweiten Haltering erfolgt nach den aus axialer Richtung durchgeführten Aufschieben der ersten/zweiten Feder durch Umformen zumindest eines Bereiches des ersten/zweiten Halteringes um das zweite Ende der Feder, so dass diese axial fixiert und radial gehalten wird.

Alternativ ist es möglich, die Führung bzw. Halterung des zweiten Endes der ersten/zweiten Feder mit dem ersten/zweiten Haltering über eine im ersten/zweiten Haltering vorhandene Ausnehmung zu realisieren, in welche das zweite Ende der ersten/zweiten Feder bei der Montage eingedreht wird.

Die Führung bzw. Halterung im Haltering kann auch wie nachfolgend beschrieben realisiert werden:
- durch verstemmen bzw. umbiegen eines Bereiches des Halteringes um das zweite Ende der Druckfeder,
- durch das Einfädeln des zweiten Endes der Feder in ein Stanzfenster des Halteringes bzw. durch das Einfädeln in einen Hinterschnitt des Halteringes, der durch umbiegen eines Bereiches des Halteringes hergestellt wurde,
- durch eine stoffschlüssige Verbindung (schweißen oder Kleben) des zweiten Endes der Druckfeder mit dem Haltering

Bei der Verwendung einer ersten Druckfeder in Form einer Spiralfeder wird somit deren zweites Ende im Haltering definiert geführt und das erste Ende stützt sich am stehenden ersten Lagerring ab, wodurch ebenfalls ein kleinerer Federdrahtdurchmesser als bei herkömmlichen Lösungen verwendet werden kann und dadurch weniger Bauraum erforderlich ist.

Entsprechend des bestehenden konstruktiven Einbauraumes können auch die erste und zweite Feder als Spiralfeder oder als Zylinderfeder oder in Form eines anderweitig ausgebildeten auf Torsion beanspruchbaren energiespeichernden Elements ausgebildet sein.

In jedem Fall überträgt das energiesparende Element das Lagerschleppmoment und entlastet in diesem Anwendungsfall die Kupplung dadurch, dass die Wirkrichtung anders ist, als im klassischen CSC, nämlich tangential, so dass die Feder das Einrücklager in Richtung Minstellung drückt.

Die Erfindung wird nachfolgend anhand eines Ausführungsbeispiels näher erläutert.

Es zeigen:
- Figur 1: einen Längsschnitt durch ein CSC für eine Doppelkupplung,
- Figur 2: eine Seitenansicht einer Spiralfeder,
- Figur 3: eine Seitenansicht einer Zylinderfeder.

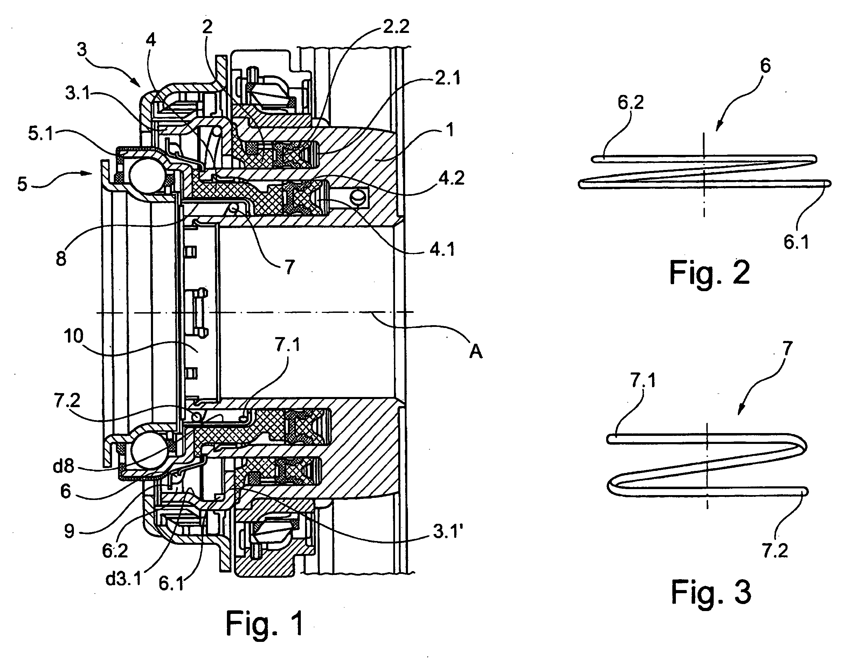

Der Nehmerzylinder ist gemäß Figur 1 als CSC Concentric Slave Cylinder ausgebildet und dient zur Betätigung einer Doppelkupplung. Er weist ein Gehäuse 1 auf, in welchem ein erster Kolben 2 in einem Druckraum 2.1 in Richtung zur Längsachse A verschiebbar angeordnet ist. An dem ersten Kolben 2 ist in Richtung zum ersten Druckraum 2.1 eine erste Dichtung 2.2 vorhanden und an dem der ersten Dichtung 2.2 gegenüberliegenden Ende wirkt der erste Kolben 2 auf einen radial nach innen weisenden Bereich 3.1' stehenden/drehfesten ersten Lagerrings 3.1 eines ersten radial außen angeordneten Einrücklagers 3.

Konzentrisch innerhalb des ersten Kolbens 2 ist ein zweiter Kolben 4 in einem zweiten Druckraum 4.1 axial verschiebbar gelagert und über eine zweite Dichtung 4.2 zum zweiten Druckraum 4.1 abgedichtet. An dem der zweiten Dichtung 4.2 gegenüberliegenden Ende wirkt der zweite Kolben 4 auf radial nach innen weisenden Bereich 5.1' des stehenden/drehfesten zweiten Lagerrings 5.1 eines radial innen angeordneten zweiten Ausrücklagers 5. Die Verdrehsicherung des stehenden ersten Lagerrings 3.1 zu dem Gehäuse 1 erfolgt über eine Spiralfeder 6 und die Verdrehsicherung des zweiten Lagerrings 5.1 zu dem Gehäuse 1 über eine Zylinderfeder 7. Die Zylinderfeder 7 ist an ihrem ersten Ende 7.1 nicht direkt, sondern über ein zweites Halteblech 8 radial verdrehgesichert mit dem zweiten Lagerring 5.1 verbunden.

Analog könnte auch die Spiralfeder 6 über ein erstes Halteblech mit dem ersten Lagerring 3.1 verbunden sein, was jedoch hier nicht der Fall ist, denn diese wirkt direkt mit ihrem ersten Ende 6.1 auf einen radial nach innen weisenden Bereich 3.1' des ersten Lagerrings 3.1.

Das zweite Ende 6.2 der Spiralfeder 6 ist verdrehgesichert über einen ersten Haltering 9 und das zweite Ende 7.2 der Zylinderfeder 7 verdrehgesichert über einen zweiten Haltering 10 mit dem Gehäuse 1 verbunden.

Die Spiralfeder 6 und die Zylinderfeder 7 übertragen das Lagerschleppmoment des ersten und zweiten Einrücklagers 4 und 5 und entlasten in diesem Anwendungsfall die nicht dargestellte Kupplung (Doppelkupplung dadurch, dass diese das jeweilige Einrücklager 3, 5 in Richtung Minstellung drückt. Die Wirkrichtung ist somit anders als in einem klassischen CSC.

Der erste Kolben 2 weist ein Spiel zum stehenden ersten Lagerring 3.1 und der zweite Kolben 4 ein Spiel zum Halteblech 8 auf, wodurch sich der erste und der zweite Kolben 2, 4 unabhängig dazu drehen können und sich der Dichtungsverschleiß der ersten und der zweiten Dichtung 2.2, 4.2 reduziert.

Die Zylinderfeder 7 wird bei entsprechendem Schleppmoment von dem Halteblech 8 radial abgestützt. Dadurch kann ein kleinerer Federdrahtdurchmesser gewählt werden, wodurch ein Bauraumvorteil zu verzeichnen ist.

Die Spiralfeder 6 stützt sich mit ihrem ersten Ende am stehenden ersten Lagerring 3.1 ab und wird im ersten Haltering 9 mit ihrem zweiten Ende 6.2 definiert geführt und, wodurch ebenfalls ein kleinerer Federdrahtdurchmesser gewählt werden kann, was ebenfalls einen geringeren Bauraum erfordert.

Bei einem wirkenden Schleppmoment werden die Spiralfeder 6 und die Zylinderfeder 7 auf Torsion beansprucht, da diese endseitig radial verdrehgesichert sind und vergrößern dadurch ihren Durchmesser. Die Spiralfeder 6 legt sich dann an den Innendurchmesser d3.1 des ersten Lagerrings 3.1 und die Zylinderfeder 7 an den Innendurchmesser d8 des Halteblechs 8 an. Dadurch gehen die Spiralfeder 6 und die Zylinderfeder 7 auf Anschlag und verhindern eine weitere Vergrößerung ihres Durchmessers und somit eine weitere Drehung des ersten/zweiten Lagerrings 3.1, 5.1.

Die Spiralfeder 6 in der Seitenansicht wird in Figur 2 gezeigt. Daraus ist ersichtlich, dass diese lediglich zwei Windungen aufweist, wodurch sie wesentlich weniger axialen Bauraum benötigt als eine herkömmliche Vorlastfeder mit beispielsweise 4 Windungen. Das erste Ende 6.1, welches auf den stehenden ersten Lagerring (hier nicht dargestellt) wirkt, hat einen größeren Durchmesser als das zweite Ende 6.2, welches im ersten Haltering (hier ebenfalls nicht dargestellt) gehalten wird.

In Figur 3 ist eine Zylinderfeder 7 dargestellt, die ebenfalls lediglich zwei Windungen aufweist und somit auch einen geringen Platzbedarf erfordert. Das erste Ende 7.1 und das zweite Ende 7.2 weisen im Wesentlichen den gleichen Durchmesser auf.

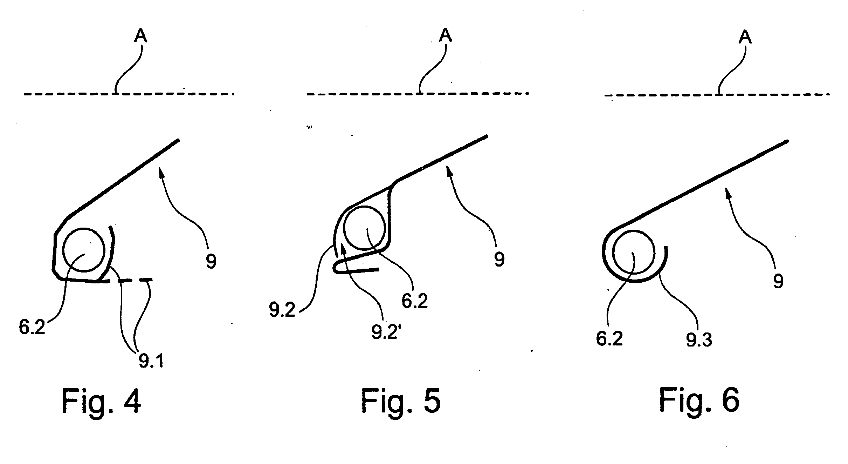

In den Figuren 4 bis 6 sind einige Varianten der Führung bzw. Halterung des zweiten Endes der Spiralfeder 6 im ersten Haltering 9 dargestellt.

Gemäß Figur 4 wurde der erste Haltering 9 in einem radial außen liegenden ersten Bereich 9.1 nach der axialen Montage (entlang der Längsachse A) der Spiralfeder um deren zweites Ende 6.2 gebogen bzw. verstemmt.

Gemäß Figur 5 wurde ein radial außen liegender zweiter Bereich 9.2 des Halterings 9 bereichsweise ausgestanzt und so gebogen, dass sich eine Halterungsöffnung 9.2' ergibt, in welche das zweite Ende 6.2 eingedreht bzw. eingefädelt wird.

Bei der Variante in Figur 6 wurde der Haltering 9 radial außen in einem dritten Bereich 9.3 so gebogen, dass sich eine Ausnehmung mit einem Hinterschnitt bildet, in welche das zweite Ende 6.2 der Spiralfeder eingedreht wird.

Gemäß nicht dargestellter Ausführungsbeispiele können das zweite Ende der Spiralfeder und der erste Haltering auch miteinander stoffschlüssig verbunden, z.B. geklebt oder verschweißt oder anderweitig miteinender verbunden sein.

Die erfindungsgemäße Lösung wird bevorzug eingesetzt, wenn die Kupplung bzw. gemäß des Ausführungsbeispiels die nicht dargestellte Doppelkupplung, in Schnüffelposition, bei welcher das System drucklos ist, eine Vorlast gegen den Einrücklageranschlag aufbringt. Dadurch ist keine Vorlast für die Einrücklager 3, 5 (s. Figur 1) des CSC notwendig und die energiespeichernden auf die Einrücklager 3, 5 wirkenden Elemente (hier die Spiralfeder 6 und die Zylinderfeder 7) müssen keine Vorlast für das erste und zweite Einrücklager 3, 5 aufbringen und dienen daher lediglich zur Schleppmomentenabstützung des ersten und zweiten Einrücklagers 3, 5. Dadurch ist es erstmalig möglich, jeweils ein relativ weiches Federelement mit zwei Windungen oder weniger (oder nur geringfügig mehr) einzusetzen.

Die Erfindung gewährleistet insgesamt die Reduzierung des benötigten radialen Bauraums bei einem CSC, bei dem keine Vorlast für die Kupplung benötigt wird, dadurch, dass eine verkürzte Feder vorzugsweise mit 1,5 bis maximal 2 Windungen eingesetzt wird, die eine Federkraft entgegen der Ausrückrichtung des CSC aufbringt. Zur Schleppmomentabstützung bei einem Doppel-CSC ohne Vorlast wird diese verkürzte Feder an den Enden mit dem feststehenden Lagerring und dem Gehäuse wirkverbunden.

### Bezugszeichenliste

- 1: Gehäuse
- 2: erster Kolben
- 2.1: erster Druckraum
- 2.2: erste Dichtung
- 3: Einrücklager
- 3.1: erster Lagerring
- 3.1': nach innen weisender Bereich des ersten Lagerrings 3.1
- 4: zweiter Kolben
- 4.1: zweiter Druckraum
- 4.2: zweite Dichtung
- 5: zweites Ausrücklager
- 5.1: zweiter Lagerring
- 5.1': nach innen weisenden Bereich des zweiten Lagerrings 5.1
- 6: Spiralfeder
- 6.1: erstes Ende der Spiralfeder 6
- 6.2: zweites Ende der Spiralfeder 6
- 7: Zylinderfeder
- 7.1: erstes Ende der Zylinderfeder 7
- 7.2: zweites Ende der Zylinderfeder 7
- 8: zweites Halteblech
- 9: erster Haltering
- 9.1: erster Bereich
- 9.2: zweiter Bereich
- 9.2': Halterungsöffnung
- 9.3: dritter Bereich
- 10: zweiter Haltering

- A: Längsachse
- d3.1: Innendurchmesser des ersten Lagerrings 3.1
- d8: Innendurchmesser des Halteblechs 8

## Patentansprüche

1. Ausrücksystem zur Betätigung einer Kupplung, wobei das Ausrücksystem in der Art eines CSC (Concentric Slave Cylinder) ausgebildet ist und zumindest einen in einem Gehäuse (1) entlang einer Längsachse (A) verschiebbaren ersten Kolben (2) aufweist, dessen in Richtung zu einem ersten Druckraum (2.1) weisendes Ende eine erste Dichtung (2.2) aufweist und der an dem der Dichtung gegenüberliegenden Bereich auf ein radial außen liegendes erstes Einrücklager (3) wirkt, wobei zu einer Verdrehsicherung eines stehenden ersten Lagerrings (3.1) des ersten Einrücklagers zur Abstützung von über das erste Einrücklager induzierten Schleppmomenten zumindest ein energiespeicherndes Element in den CSC integriert ist, welches mit einem tangentialen Abstützmoment (Torsionsmoment) dem Schleppmoment entgegenwirkt, **dadurch gekennzeichnet, dass** das Ausrücksystem zur Betätigung einer Doppelkupplung ausgebildet ist und einen zum ersten Kolben (2) konzentrisch angeordneten und radial innen liegenden und entlang der Längsachse (A) verschiebbaren zweiten Kolben (4) aufweist, der in Richtung zu einem zweiten Druckraum (4.1) eine zweite Dichtung (4.2) aufweist, wobei der zweite Kolben (4) an dem der zweiten Dichtung (4.2) gegenüberliegenden Bereich auf ein radial innen liegendes zweites Einrücklager (5) wirkt, und zu einer Verdrehsicherung eines stehenden zweiten Lagerrings (5.1) des zweiten Einrücklagers (5) zur Abstützung von über das zweite Einrücklager (5) induzierten Schleppmomenten zumindest ein weiteres energiespeicherndes Element in den CSC integriert ist, welches mit einem tangentialen Abstützmoment (Torsionsmoment) dem Schleppmoment entgegenwirkt und wobei die energiespeichernde Elemente als auf Torsion beanspruchbare Druckfedern ausgebildet sind, die jeweils maximal 2 Windungen aufweisen und wobei eine erste Druckfeder an ihrem ersten Ende radial verdrehgesichert direkt oder über ein erstes Halteblech mit dem ersten Lagerring (3.1) des ersten Einrücklagers (3) und mit ihrem zweiten Ende verdrehgesichert direkt oder über einen ersten Haltering (9) mit dem Gehäuse (1) verbunden ist und eine zweite Druckfeder an ihrem ersten Ende radial verdrehgesichert direkt oder über ein zweites Halteblech (8) mit dem zweiten Lagerring (5.1) des zweiten Einrücklagers (5) und mit ihrem zweiten Ende verdrehgesichert direkt oder über einen zweiten Haltering (10) mit dem Gehäuse (1) verbunden ist.

2. Ausrücksystem nach Anspruch 1, **dadurch gekennzeichnet, dass** bei einem über den ersten Lagerring (3.1) induzierten Schleppmoment sich die erste Druckfeder entsprechend ihres Torsionsmomentes verdreht und ihren Durchmesser vergrößert und/oder dass bei einem über den zweite Lagerring (5.1) induzierten Schleppmoment sich die zweite Druckfeder entsprechend ihres Torsionsmomentes verdreht und ihren Durchmesser vergrößert.

3. Ausrücksystem nach Anspruch 2, **dadurch gekennzeichnet, dass** ein Anschlag vorhanden ist, der die Vergrößerung des Durchmessers der Druckfeder begrenzt und dass der Anschlag durch den ersten oder zweiten Kolben (2. 4) oder das dem ersten oder zweiten Einrücklager (3, 5) zugeordnete erste/zweite Halteblech gebildet wird.

4. Ausrücksystem nach einem der Ansprüche 1 bis 3, **dadurch gekennzeichnet, dass** der erste/zweite Kolben (2, 4) zu dem diesem zugeordneten ersten/zweiten Halteblech (8) ein Spiel aufweist und dazu relativ drehbar ist und dass die erste/zweite Dichtung (2.2, 4.2) ein Spiel zum ersten/zweiten Kolben (2, 4) aufweist und relativ zu diesem drehbar ist.

5. Ausrücksystem nach einem der Ansprüche 1 bis 4, **dadurch gekennzeichnet, dass** sich am feststehenden ersten Lagerring (3.1) die erste Druckfeder in Form einer Spiralfeder (6) mit ihrem ersten Ende (6.1) abstützt und mit ihrem zweiten Ende (6.2) mit dem mit dem Gehäuse (1) verbundenen ersten Haltering (9) wirkverbunden ist und dass sich am feststehenden zweiten Lagerring (5.1) über das an diesem befestigte zweite Halteblech (8) die zweite Druckfeder in Form einer Zylinderfeder (7) mit ihrem ersten Ende (7.1) abstützt und mit ihrem zweiten Ende über den zweiten Haltering (10) mit dem Gehäuse (1) verbunden ist.

6. Ausrücksystem nach Anspruch 5, **dadurch gekennzeichnet, dass** die Führung/Halterung des zweiten Endes (6.2) der Spiralfeder (6) mit dem ersten Haltering (9) nach dem Montieren der Spiralfeder (6) durch Umformen zumindest eines Bereiches des ersten Halteringes (9) um das zweite Ende (6.2) der Spiralfeder (6) realisiert wird.

7. Ausrücksystem nach einem der Ansprüche 5 bis 6, **dadurch gekennzeichnet, dass** die Führung/Halterung des zweiten Endes (6.2) der Spiralfeder (6) mit dem ersten Haltering (9) über eine im ersten Haltering (9) vorhandene Ausnehmung erfolgt, in welche das zweite Ende der Spiralfeder (6) bei der Montage eingedreht wird.

## Claims

1. Release system for actuating a clutch, the release system being configured in the manner of a CSC (Concentric Slave Cylinder) and having at least one first piston (2) which can be displaced along a longitudinal axis (A) in a housing (1) and the end of which, which points in the direction of a first pressure space (2.1), has a first seal (2.2), and which piston (2) acts on a radially outer first engagement bearing (3) at the region which lies opposite the seal, at least one energy-storing element being integrated into the CSC as an anti-rotation safeguard of a stationary first bearing ring (3.1) of the first engagement bearing for supporting drag torques which are induced via the first engagement bearing, which energy-storing element counteracts the drag torque by way of a tangential supporting torque (torsional moment), **characterized in that** the release system is configured for actuating a double clutch and has a second piston (4) which is arranged concentrically with respect to the first piston (2), lies radially on the inside, can be displaced along the longitudinal axis (A), and has a second seal (4.2) in the direction of a second pressure space (4.1), the second piston (4) acting on a radially inner second engagement bearing (5) at the region which lies opposite the second seal (4.2), and at least one further energy-storing element being integrated into the CSC as an anti-rotation safeguard of a stationary second bearing ring (5.1) of the second engagement bearing (5) for supporting drag torques which are induced via the second engagement bearing (5), which further energy-storing element counteracts the drag torque by way of a tangential supporting torque (torsional moment), and the energy-storing elements being configured as compression springs which can be loaded torsionally and each have at most two windings, and a first compression spring being connected at its first end in a manner which is secured radially against rotation directly or via a first holding plate to the first bearing ring (3.1) of the first engagement bearing (3) and by way of its second end in a manner which is secured against rotation directly or via a first holding ring (9) to the housing (1), and a second compression spring being connected at its first end in a manner which is secured radially against rotation directly or via a second holding plate (8) to the second bearing ring (5.1) of the second engagement bearing (5) and by way of its second end in a manner which is secured against rotation directly or via a second holding ring (10) to the housing (1).

2. Release system according to Claim 1, **characterized in that**, in the case of a drag torque which is induced by the first bearing ring (3.1), the first compression spring rotates in accordance with its torsional moment and enlarges its diameter and/or **in that**, in the case of a drag torque which is induced by the second bearing ring (5.1), the second compression spring rotates in accordance with its torsional moment and enlarges its diameter.

3. Release system according to Claim 2, **characterized in that** there is a stop which limits the enlargement in the diameter of the compression spring, and **in that** the stop is formed by the first or second piston (2, 4) or the first/second holding plate which is assigned to the first or second engagement bearing (3, 5).

4. Release system according to one of Claims 1 to 3, **characterized in that** the first/second piston (2, 4) has a play with respect to the first/second holding plate (8) which is assigned to it and can be rotated relative thereto, and **in that** the first/second seal (2.2, 4.2) has a play with respect to the first/second piston (2, 4) and can be rotated relative to the latter.

5. Release system according to one of Claims 1 to 4, **characterized in that** the first compression spring in the form of a helical spring (6) is supported by way of its first end (6.1) on the stationary first bearing ring (3.1) and is operatively connected by way of its second end (6.2) to the first holding ring (9) which is connected to the housing (1), and **in that** the second compression spring in the form of a cylinder spring (7) is supported by way of its first end (7.1) on the stationary second bearing ring (5.1) via the second holding plate (8) which is fastened thereto and is connected by way of its second end to the housing (1) via the second holding ring (10).

6. Release system according to Claim 5, **characterized in that** the guidance/securing of the second end (6.2) of the helical spring (6) is realized by way of the first holding ring (9) after mounting of the helical spring (6) by way of reshaping of at least one region of the first holding ring (9) around the second end (6.2) of the helical spring (6).

7. Release system according to either of Claims 5 and 6, **characterized in that** the guidance/securing of the second end (6.2) of the helical spring (6) takes place by way of the first holding ring (9) via a recess which is present in the first holding ring (9) and into which the second end of the helical spring (6) is screwed during mounting.

## Revendications

1. Système de débrayage pour la commande d'un embrayage, le système de débrayage étant réalisé à la manière d'un CSC (Concentric Slave Cylinder) et présentant au moins un premier piston (2) déplaçable dans un boîtier (1) le long d'un axe longitudinal (A), dont l'extrémité tournée dans la direction d'un premier espace de pression (2.1) présente un premier joint d'étanchéité (2.2) et qui agit au niveau de la région opposée au joint d'étanchéité sur un premier palier d'embrayage (3) situé radialement à l'extérieur, au moins un élément accumulateur d'énergie étant intégré dans le CSC en vue d'une fixation en rotation d'une première bague de palier fixe (3.1) du premier palier d'embrayage pour supporter des couples de patinage induits par le biais du premier palier d'embrayage, lequel élément accumulateur d'énergie agit à l'encontre du couple de patinage avec un couple de support tangentiel (couple de torsion), **caractérisé en ce que** le système de débrayage est réalisé pour commander un double embrayage et présente un deuxième piston (4) disposé de manière concentrique par rapport au premier piston (2), situé radialement à l'intérieur et déplaçable le long de l'axe longitudinal (A), lequel présente un deuxième joint d'étanchéité (4.2) dans la direction d'un deuxième espace de pression (4.1), le deuxième piston (4) agissant au niveau de la région opposée au deuxième joint d'étanchéité (4.2) sur un deuxième palier d'embrayage (5) situé radialement à l'intérieur, et au moins un élément accumulateur d'énergie supplémentaire est intégré dans le CSC en vue d'une fixation en rotation d'une deuxième bague de palier fixe (5.1) du deuxième palier d'embrayage (5) pour supporter des couples de patinage induits par le biais du deuxième palier d'embrayage (5), lequel élément accumulateur d'énergie agit à l'encontre du couple de patinage avec un couple de support tangentiel (couple de torsion), et les éléments accumulateur d'énergie étant réalisés sous forme de ressorts de compression pouvant être sollicités en torsion, lesquels présentent à chaque fois au maximum 2 enroulements et un premier ressort de compression étant connecté au niveau de sa première extrémité de manière fixée en rotation radialement directement ou par le biais d'une première tôle de retenue à la première bague de palier (3.1) du premier palier d'embrayage (3) et par sa deuxième extrémité de manière fixée en rotation directement ou par le biais d'une première bague de retenue (9) au boîtier (1), et un deuxième ressort de compression étant connecté au niveau de sa première extrémité de manière fixée en rotation radialement directement ou par le biais d'une deuxième tôle de retenue (8) à la deuxième bague de palier (5.1) du deuxième palier d'embrayage (5) et par sa deuxième extrémité de manière fixée en rotation directement ou par le biais d'une deuxième bague de retenue (10) au boîtier (1).

2. Système de débrayage selon la revendication 1, **caractérisé en ce que** dans le cas d'un couple de patinage induit par le biais de la première bague de palier (3.1), le premier ressort de compression se tord de manière correspondant à son couple de torsion et augmente de diamètre et/ou **en ce que** dans le cas d'un couple de patinage induit par le biais de la deuxième bague de palier (5.1), le deuxième ressort de compression se tord en fonction de son couple de torsion et augmente de diamètre.

3. Système de débrayage selon la revendication 2, **caractérisé en ce qu'**il est prévu une butée qui limite l'augmentation de diamètre du ressort de compression et **en ce que** la butée est formée par le premier ou le deuxième piston (2, 4) ou par la première/deuxième tôle de retenue associée au premier ou au deuxième palier d'embrayage (3, 5).

4. Système de débrayage selon l'une quelconque des revendications 1 à 3, **caractérisé en ce que** le premier/deuxième piston (2, 4) présente un jeu par rapport à la première/deuxième tôle de retenue (8) associée à celui-ci et peut tourner par rapport à celle-ci et **en ce que** le premier/deuxième joint d'étanchéité (2.2, 4.2) présente un jeu par rapport au premier/deuxième piston (2, 4) et peut tourner par rapport à celui-ci.

5. Système de débrayage selon l'une quelconque des revendications 1 à 4, **caractérisé en ce que** le premier ressort de compression s'appuie par sa première extrémité (6.1) sous la forme d'un ressort spiral (6) contre la première bague de palier fixe (3.1) et est en liaison fonctionnelle par sa deuxième extrémité (6.2) avec la première bague de retenue (9) connectée au boîtier (1) et **en ce que** le deuxième ressort de compression s'appuie par sa première extrémité (7.1) sous la forme d'un ressort cylindrique (7) contre la deuxième bague de palier fixe (5.1) par le biais de la deuxième tôle retenue (8) fixée à celle-ci et est connecté par sa deuxième extrémité au boîtier (1) par le biais de la deuxième bague de retenue (10).

6. Système de débrayage selon la revendication 5, **caractérisé en ce que** le guidage/la fixation de la deuxième extrémité (6.2) du ressort spiral (6) sur la première bague de retenue (9) est réalisé(e) après le montage du ressort spiral (6) par façonnage d'au moins une région de la première bague de retenue (9) autour de la deuxième extrémité (6.2) du ressort spiral (6).

7. Système de débrayage selon l'une quelconque des revendications 5 à 6, **caractérisé en ce que** le guidage/la fixation de la deuxième extrémité (6.2) du ressort spiral (6) sur la première bague de retenue (9) s'effectue par le biais d'un évidement prévu dans la première bague de retenue (9), dans lequel est vissée la deuxième extrémité du ressort spiral (6) lors du montage.
